# EUROPEAN PATENT APPLICATION

(11) **EP 1 471 438 A1**
(43) Date of publication of application: **27.10.2004**
(21) Application number: 03290997.0
(22) Date of filing: 23.04.2003
(51) Int. Cl.: G06F 17/24, G06F 3/033

(54) **Process for controlling the display of a two-dimensional table and graphic object for doing the same**

(71) Applicant: Hewlett-Packard Development Company, L.P., Houston, TX 77070 (US)
(72) Inventor: The designation of the inventor has not yet been filed
(74) Representative: Lloyd, Richard Graham (GB)

(57) **Abstract**

A process for controlling the display of a multidimensional matrix or table comprising elementary information items or elements. The process involves the steps of: determining a first and a second dimension; constructing a two-dimensional matrix arranged in accordance with said first and said second dimensions for a first representation of said data structure; displaying said two-dimensional matrix; detecting the existence of a local area of said matrix containing the same information items or elements; collapsing said local area in order to reduce the size of said matrix and simplify the representation of said data structure. There is therefore provided an expandable matrix providing access to a complex data structure.

## Description

### TECHNICAL FIELD OF THE INVENTION

The invention relates to information handling systems and, more particularly, to a process for controlling the display of an expandable two-dimensional matrix or table and a graphic object for doing the same.

### BACKGROUND ART

The advent of computers and the development of telecommunications has substantially increased the generation, the transmission and the access to information.

Despite the limited area of the computer screens on which information is displayed to the user, the tendency is to continuously increase the quality and the volume of the information which is displayed to the user by means of enhanced Graphical User Interfaces (G.U.I.).

The limited size of the display is a clear drawback when a large number of items and information elements are to be displayed and the ergonomy of GUIs is continually being improved to facilitate access to displayed information in spite of the limited area of the displays.

Many techniques are known in the art for improving the ergonomy of user interfaces. A well known graphical object the use of which is widespread is the basic combobox which allows, when actuated, to display a number of items in a particular field for the purpose of facilitating selection by the user or for filling in an electronic form.

Pop-up menus and contextual help systems are also a well known techniques for facilitating the execution of commands of a computer system.

### SUMMARY OF THE INVENTION

It is an object of the present invention to improve the possibilities for displaying complex data structures on a display screen.

In brief, this object is achieved by a process for controlling the display of a multidimensional matrix or table comprising elementary information items or elements corresponding to a data structure. The process involves the steps of:
- determining a first (A(n)) and a second dimension (B(m));
- constructing a two-dimensional matrix arranged in accordance with said first and said second dimensions;
- displaying said two-dimensional matrix;
- detecting the existence of an area of said matrix containing the same information items or elements;
- collapsing said detected area in order to reduce the size of said matrix.

This enables a user selectable reduction/expansion of the matrix and simplifies the final representation on the display while allowing the user intuitive access to more complex representations, based on matrixes, of a data structure.

Preferably, the process expands and develops a local area of said matrix in order to give the user access of to a desired portion of the data structure.

Preferably, the matrix displays visual tags, textual information or U.R.L locators.

The invention also provides a process for facilitating the update of the contents of a data structure based on the use of an expandable matrix or table. Upon action from the user, the matrix is developed and the user is given the possibility to accede to a developed area of said matrix and to update the contents of the data structure.

Preferably, the process is used to create a graphical object for displaying a complex data structure, said graphical object displaying an expandable matrix or table representative of a complex data structure.

### DESCRIPTION OF THE DRAWINGS

An embodiment of the invention will now be described, by way of example only, with reference to the accompanying drawings, wherein:
Figures 1, 2 and 3 illustrate an example of a two dimensional matrix with collapsible areas.
Figure 4 is a flow chart illustrating a process for displaying an expandable matrix or table.
Figure 5 illustrates the process for using an expandable matrix or table for the purpose of updating a data structure.

### DESCRIPTION OF THE PREFERRED EMBODIMENT OF THE INVENTION

There will now be described a preferred embodiment of a process for controlling a expandable matrix for the purpose of providing enhanced access to the information of a data structure that is displayed to the user.

In the preferred embodiment, the data structure is a database for the management of a repository of binary drivers for computer peripherals. As known in the art, product manufacturers or software editors have to maintain large software repositories comprising a huge number of object code files and software programs. A number of identifiers are used to represent the wide variety of situations applicable to such a repository of binary codes which is considered, for instance the localisation or language of the version (LOCation), the particular platform on which the code is assumed to operate (PC, MAC computers) and also the particular operating system (Linux, Windows of Microsoft Corp. Etc...)

Those identifiers (LOC, OS etc...) are used by the customers of the software editor or product manufacturer for the purpose of accessing the appropriate file or driver within the repository.

Considering the diversity of the machines which might be supported, the number of operating systems on which they are likely to run, the variety of the operating systems as well as the different patches which are available, substantially increases the overall complexity of the representation of the data structure.

If the driver or the binary code has versions with multiple languages, different OS's or patches (Service Pack 1, Service Pack 2 etc...) and even different platforms, the complexity of the data structure might result in it becoming impossible to display on a display device or in a window having limited area. In some cases it might be necessary to distribute the information between different matrices or tables.

Therefore, a repository of drivers or binary software is a typical situation where a great number of identifiers, items or information elements have to be displayed to the user so as toprovide clear and unambiguous information regarding the particular resources for which they have an interest.

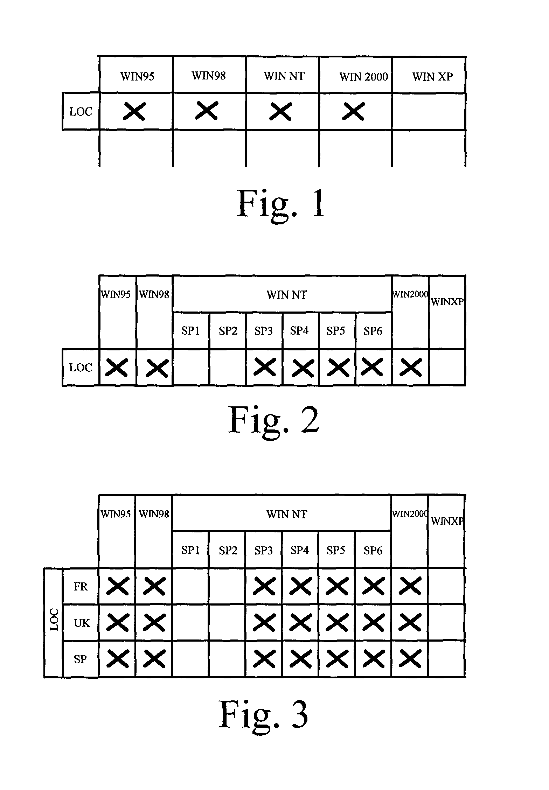

Figure 1 illustrates one situation where a driver is represented as being compliant with successive versions of WINDOWS 95, WINDOWS 98, WINDOWS NT while not compliant with a version of WINDOWS XP. The compliance with one operating system is represented in matrix of figure 1 by a cross although of course any other suitable visual element could equally be used.

Figure 2 illustrates the same representation with the WIN NT identifier being expanded to show compliance with the different Service Packs (SP1 to SP6). It can be seen, again, that the considered driver complies with service packs SP3 to SP6 and not with service packs SP1-SP3.

As the number of situations increases - and correspondingly the complexity of the data structure - the size of the matrix considerably increases. Figure 3 shows the expansion of the LOC (Location) field being representative of the localisation or language used for the driver or compiled source codes.

The invention provides an effective solution to the problem of displaying the complexity resulting from the combination of a wide set of identifiers.

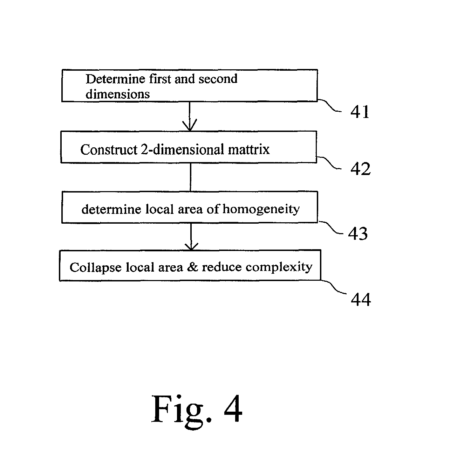

Figure 4 illustrates the process which is executed for making a two-dimensional matrix expandable. The matrix is arranged in a set of dimensions A(n), B(m), C(k) ... Once displayed, the matrix comprises a set of information elements I(A(n), B(m),and C(k)) which can be visual tags (a cross for instance), textual elements such as a part number or even Uniform Resource Locators (URL). Considering again the case of the repository of binary codes, A(n) (with n= 1, 2...) can be a sequence of languages; B(m) (with m=1, 2...) is a number of operating systems possibly subdivided by service packs; C(k) ( with k = 1,2...) is a sequence of platforms on which the binary code can be executed.

The process starts with a step 41 where two main dimensions are defined.

In one embodiment, the two dimensions are defined in response to a choice from the user, although in other embodiments, the two main dimensions might be automatically computed. This might be achieved, for instance, by the calculation of a suitable simple cost function which is defined as a function of the different dimensions to consider. Each pair of dimensions results in one particular cost function which is representative of the complexity of the matrix and this cost functionwould be minimized in order to determine the two main dimensions..

In a step 42, the process constructs a two dimensional matrix which is based on the first and second dimensions determined in step 41.

In a step 43, the process determines a local area within the matrix which has common elements to display. If the driver or binary code is assumed to be operational for every language (such as shown in figure 3), such condition is determined in step 43.

In a step 44, an automatic factorisation is executed and the process collapses the dimension which has common identifiers or elements to be displayed. This results in the matrix represented in figure 3 being reduced to that of figure 2. With respect to figure 3, it can be seen that while the binary codes is compliant with service packs SP3-SP6 for all the three languages, a reduction of the matrix is rendered feasible by collapsing the three lines into one single line.

In a step 45, the process then displays the resulting matrix which occupies a limited area of the screen with respect to the original representation.

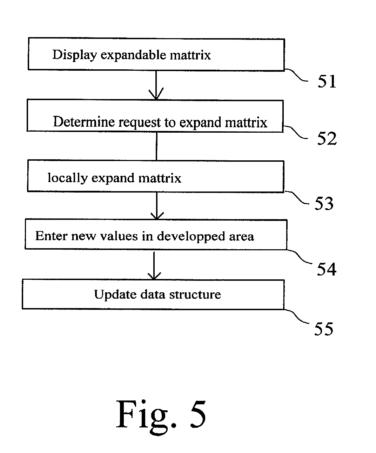

There is thus provided a new tool for improving the access to visual information to the user. In addition, there is also provided a new tool for entering information in a complex data structure. This will be particularly described with reference to figure 5.

In a step 51, the process displays the expandable matrix in accordance with the process of figure 4.

In a step 52, the process determines whether one particular area of the matrix is to be expanded. In one preferred embodiment, this is achieved in response to an action from the user, for instance when a specific key or icon is actuated. Therefore, this allows position A(n) B(m) of the matrix to be expanded in a subset of lines and a subset of columns.

In a step 53, the process then develops the corresponding area for the purpose of giving the user the possibility to have visual access to the contents of the sub-dimensions which are now displayed. In practice, if the matrix was that of figure 2, the action of step 53 results in the development of the line corresponding to the LOC dimension, i.e. the expansion of the matrix with respect to the different languages.

In a step 54, the user is given the possibility to update or change the contents of the different individual elements and, thus affect the complexity of the data structure represented by the matrix.

In a step 55, the process updates the data structure in accordance with the new values entered by the user.

It can be seen that the process provides an expandable matrix which is an effective tool for displaying complex data structures and also a tool for entering values within said data structures.

The invention has been described in relation to the arrangement and organization of a repository of binary codes. Clearly, this is only an example which is given for the sake of illustration. The techniques may be straightforwardly adapted to the design of any other similar or comparable structure or database.

More generally, the process which was described above is easily adapted for the purpose of providing a graphical object, such as an Active X object which controls an expandable matrix containing different kinds of items or information elements, such as text, hyperlinks or Uniform Resources Locators (U.R.L.) etc.... Upon detection of a same set of URLs - for instance - the process causes collapsing of the matrix in order to reduce the size and facilitate reading by the user.

There will now be illustrated one illustrative embodiment of a recursive algorithm which permits the realization of a column collapsing function.

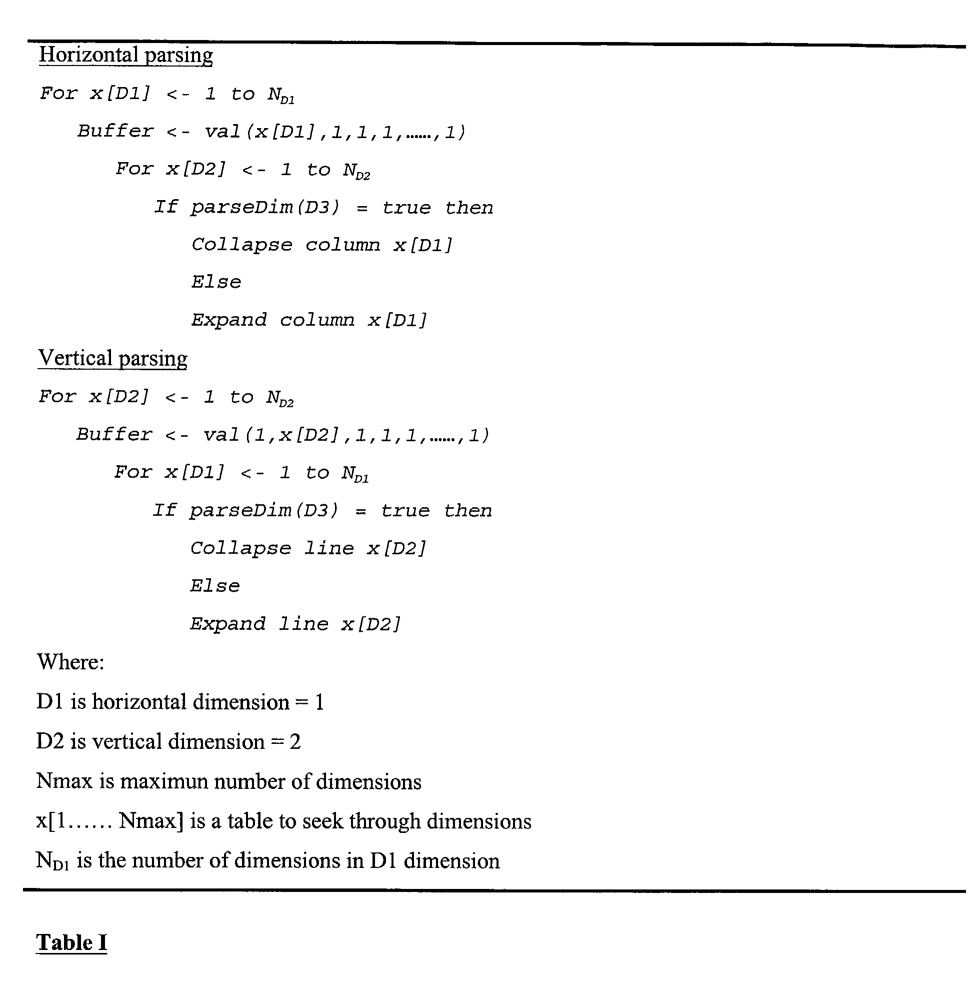

In the code above, there is used a so-called Parsedim function is used for this embodiment for the purpose of checking homogeneity in dimensions in depth (D3 to n). Such a function can be embodied as follows:

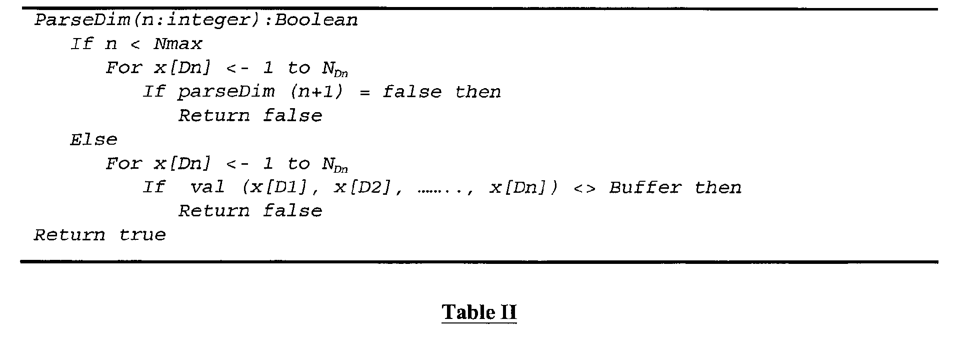

## Claims

1. Process for controlling the display of a multidimensional table comprising elementary information items or elements (A(n), B(m), C(k) ...) corresponding to a data structure, said process comprising the steps of :
- determining a first (A(n)) and a second dimension (B(m));
- constructing a two-dimensional matrix arranged in accordance with said first and said second dimensions;
- displaying said two-dimensional matrix;
- detecting the existence of an area of said matrix containing the same information items or elements;
- collapsing said detected area in order to reduce the size of said matrix.

2. Process for controlling the display of a multidimensional table as claimed in claim 1 comprising the step of expanding an area of said matrix with respect to a third dimension C(n), in order to display a predeterminable portion of said data structure.

3. Process for controlling the display of a multidimensional table as claimed in any preceding claim wherein displayed items or elements are a tag or a Uniform Resource Locator (URL).

4. Process for controlling the display of a multidimensional table as claimed in any preceding claim comprising:
- expanding said matrix in response to an action;
- allowing a user to enter new values in the expanded area of said matrix;
- correspondingly updating said data structure.

5. Process according to any preceding claim wherein said data structure comprises information elements corresponding to a repository of binary codes or compiled source codes, for the purpose of representation of the localisation, the language requirements and/or the operating system.

6. A graphical object for displaying a complex data structure, said graphical object including program code elements for carrying out a process as claimed in any preceding claim.

7. A computer program product comprising a graphical User Interface (G.U.I) having program code elements for carrying out a process as claimed in any of claims 1 to 5.
